# EUROPÄISCHE PATENTSCHRIFT

(11) **EP 1 028 280 B1**
(45) Veröffentlichungstag und Bekanntmachung des Hinweises auf die Patenterteilung: **20.04.2005**
(21) Anmeldenummer: 00102702.8
(22) Anmeldetag: 09.02.2000
(51) Int. Cl.: F16K 27/12, F16L 59/16

(54) **Isolierkappe für Leitungsarmaturen**
Insulation cover for pipeline armatures
Coiffe isolante pour des armatures de conduit

(30) Priorität: 11.02.1999 DE 19905744
(43) Veröffentlichungstag der Anmeldung: 16.08.2000
(73) Patentinhaber: Sebald Iso-Systeme GmbH & Co.KG, 93152 Nittendorf (DE)
(72) Erfinder: Holl, Frank, 81245 München (DE)
(74) Vertreter: Hertz, Oliver, Dr.

(56) Entgegenhaltungen:
- EP-A- 0 108 856
- CH-A- 418 072
- US-A- 3 724 491
- US-A- 5 348 044

## Beschreibung

Die Erfindung betrifft eine Isolierkappe für Leitungsarmaturen, insbesondere für verflanschte Heizungs- oder Sanitärarmaturen, wie z.B. Ventile, Schieber, Schmutzfänger oder Klappen, und Bauteile einer derartigen Isolierkappe.

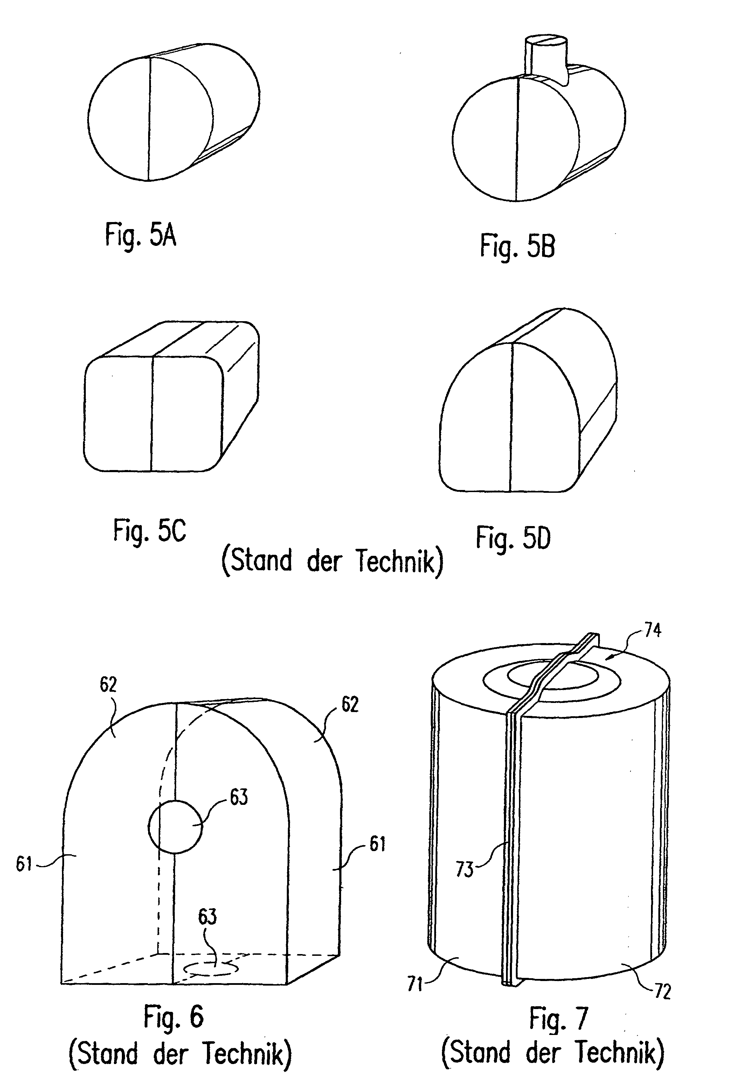

Es ist allgemein bekannt und in Deutschland gesetzlich vorgeschrieben, Rohrleitungen von Heizungsanlagen nicht nur entlang der Rohrlängen, sondern auch im Bereich von Flanschverbindungen zwischen Rohren oder die Rohrarmaturen thermisch zu isolieren. Damit die Isolierung zur Wartung der Rohrverbindungen bzw. -armaturen jederzeit demontiert werden kann, verlangt die Praxis die Verwendung von zwei- oder mehrteiligen, isolierenden Kappen, die nach der Demontage wieder verwendet werden können. Isolierkappen zur Wärmedämmung an Rohrverbindungen oder -armaturen besitzen die folgenden, unter Bezug auf die Fign. 5 bis 7 (Stand der Technik) erläuterten Grundformen.

Zur Isolierung von Rohrverbindungen in Form aneinanderstoßender Rohr-Flanschpaare sind Flanschkappen gemäß Fig. 5A in Form eines zylindrischen Gehäuses bekannt, das das Flanschpaar umgibt und ein Isoliermaterial zur Wärmedämmung aufnimmt. In der Regel sind die Flanschkappen longitudinal geschnitten. Dies bedeutet, daß das Gehäuse aus zwei Teilen besteht, die entlang einer Schnittlinie verbunden sind. Die Schnittlinie liegt in einer Bezugsebene, in der auch die am Flanschenpaar zusammenführenden Rohrleitungen und die von den Rohrleitungen abstehende Armatur liegen.

Für verflanschte Rohrarmaturen (Ventile, Hähne, Klappen, Schmutzfänger etc.) sind Stutzenkappen gemäß Fig. 5B mit einer zylindrischen Grundform bekannt, die im Bereich der Armaturenspindel oder eines Stellrades/-hebels eine Ausladung des Kappenmantels aufweist. Alternativ zu den Stutzenkappen gibt es für Rohrarmaturen auch Kofferkappen (sogenannte "Formkappen") in Form eines quaderförmigen Kastens mit vier flachen Mantelseiten gemäß Fig. 5C (sogenannte Viereckkappe) oder in Form eines Gehäuses gemäß Fig. 5D, das auf der dem Stellrad oder dgl. abgewandten Seite entsprechend der Flanschform abgerundet und nur auf der Vorderseite (in der Darstellung: Unterseite) im Bereich des Stellrades flach wie die Viereckkappe ist.

Aus der Praxis sind Stutzen-, Koffer- oder Flanschkappen aus Blech bekannt, bei denen ein Mantelblech mit den beidseitigen Deckelblechen so zusammengesetzt sind, wie dies beispielhaft in Fig. 6 für eine Kofferkappe dargestellt ist. Das Mantelblech 61 ist an seinem Rand mit den Deckelblechen 62 fest und unveränderlich verbunden. Hierzu ist beispielsweise das Dekkelblech 62 am Rand rund 5 mm hochgebördelt und mit den Mantelblechen 61 durch Einsprengung in die Kastensicke mit Falz verbunden. Speziell für Außenanwendungen besitzt das in Betriebsposition obere Deckelblech gegebenenfalls eine Abschrägung und Rändelung am Rand, die das Mantelblech überlappt. Die Bezugszeichen 63 bezeichnen Durchtrittsöffnungen für Rohre oder Armaturenteile. Diese Isolierkappen aus Blech besitzen den Nachteil, daß sie bedarf- und größenabhängig in der Isolierspenglerei oder Blechwerkstatt vorgefertigt werden müssen. Gegebenenfalls ergeben sich jedoch an der Baustelle beengte Montageverhältnisse oder Einschränkungen durch angrenzende Armaturen. Hierdurch würde eine Änderung der Baulänge des Mantelbleches notwendig werden, wodurch jedoch die optische Erscheingungsform der Kappe gestört wird. Eine derartige Anpassung ist auch immer unter wirtschaftlichen Gesichtspunkten wegen des erhöhten Zeit- und Spezialwerkzeugaufwands unakzeptabel.

Es sind auch zweiteilige Isolierkappen als Stutzen- bzw. Flanschkappen allgemein bekannt, die aus Hartschaum (Polyurethan oder Polyisocyanurat) geformt sind und die einen äußeren Kunststoffmantel besitzen. Der Isolierschaum ist mit dem Kappengehäuse fest verbunden. Einige dieser Kappen haben einen längenvariablen Einsatz im Bereich der Armaturenspindel, um sich deren Ausladung anzupassen. Auch diese Kappen können an die Baulänge der Armatur vor Ort nicht angepaßt werden, ohne die Kappenform weitgehend zu zerstören. Ein weiterer Nachteil dieser Kappen ist, daß das harte Isoliermaterial dem Armaturenkörper möglichst genau angepaßt sein muß. Für die vielen unterschiedlichen Armaturentypen und -baukörper müssen jeweils passende Isolierkappen zur Verfügung stehen, was zur beträchtlichen Sortimentshaltung bei den Isoliererhandwerkern führt.

Es sind ferner Stutzenkappen bekannt, die im Spritzgußverfahren aus Kunststoff hergestellt werden und aus zwei Kappenhälften und mehreren Ergänzungsringen bzw. -teilen bestehen, die über Verbindungszapfen zusammengesetzt und miteinander verklebt werden können. Mit Hilfe der Ergänzungsringe können sowohl die Baulänge der Isolierkappe als auch die Spindelausladung nach vorne verändert werden. Diese Isolierkappen besitzen den Nachteil, daß die Verbindungszapfen nur diskrete Einstellungen der Steckverbindungen erlauben, wodurch eine variable Anpassung an die Bedingungen der Baustelle nur grob stufenweise und nicht genau genug möglich ist. Wiederum ist die nachträgliche Bearbeitung der Spritzgußteile unwirtschaftlich und technisch aufwendig.

Ein genereller Nachteil der Stutzenkappen besteht in der Anbringung der Ausladung des Kappenmantels für die Absperrvorrichtung (Spindel, Hebel etc.), die armaturenspezifisch gebildet sein muß. Dadurch ist es erforderlich, daß für die Vielzahl der Armaturbauformen auch ein großes Sortiment von Stutzenkappenbauformen erforderlich wären. Stutzenkappen haben im Vergleich zu Kofferkappen den Nachteil, daß der Lochausschnitt für die Absperrvorrichtung stets zentriert im Stutzen sein muß, weshalb die Kappe bei der Montage nicht aus der Mitte verschoben werden kann, wie es in der Praxis gelegentlich notwendig ist.

Eine weitere Bauform bekannter Isolierkappen für Flanscharmaturen, die durch Thermoverformung aus Kunststoff vorgefertigt werden, ist in Fig. 7 illustriert. Die vorgefertigte Flanschkappe (auch als Kofferkappe hergestellt), besteht aus zwei Kappenhälften oder Kappenschalen 71, 72, die jeweils am Rand Stehflansche 73 aufweisen, über die die Kappenschalen mechanisch miteinander verbunden werden können. Die Abstufung 74 auf der durch die Kappenschalen 71, 72 gebildeten Stirn- oder Deckelfläche erlaubt die Anpassung der Isolierkappe an verschiedene Rohrdurchmesser. Bei diesen Isolierkappen wird ein flexibles Isoliermaterial nachträglich an der Baustelle eingebracht. Die Isolierkappen gemäß Fig. 7 besitzen den Nachteil, daß eine Baulängenänderung nicht möglich ist. Falls die durch die Kappenschalen gebildete Mantelfläche gekürzt werden soll, könnten die Kappenhälften nicht montiert werden. Ein weiterer Nachteil der durch Thermoverformung vorgefertigten Kappenhälften besteht in deren geringer mechanischer Stabilität. Die Thermoverformung verursacht Dickenschwankungen, die insbesondere in den Kanten- oder Wölbungsbereichen kritisch sind.

Weitere Isolierkappen für Armaturen sind aus der gattungsbildenden EP 108 856, aus CH 418 072 und US 5 348 044 bekannt.

Es ist die Aufgabe der Erfindung, eine verbesserte Isolierkappe anzugeben, mit der die Nachteile der herkömmlichen Isolierkappen vermieden werden und die insbesondere mit einfachen Mitteln unter den konkreten Baustellenbedingungen an die zu isolierende Rohrverbindung oder -armatur angepaßt werden kann, auch nach einer Anpassung ein annehmbares optisches Erscheinungsbild bietet, eine hohe Stabilität aufweist und eine spätere zerstörungsfreie Demontage ermöglicht. Mit dieser Kappe soll es möglich sein, jedes flexible Isoliermaterial für die Wärmedämmung der Flanscharmatur zu verwenden, das sich um jede Armaturenkörperform passend anlegen kann.

Diese Aufgabe wird durch eine Isolierkappe mit den Merkmalen gemäß Anspruch 1 gelöst. Vorteilhafte Ausführungsformen und Verwendungen der Isolierkappe ergeben sich aus den abhängigen Ansprüchen.

Die Grundidee der Erfindung besteht darin, eine Isolierkappe mit zwei Kappenschalen aufzubauen, die jeweils aus getrennten, zusammensetzbaren oder zusammengesetzten Einzelteilen bestehen und dazu eingerichtet sind, erst bei der Montage zur Bildung der gesamten Isolierkappe zusammengebaut zu werden. Die Einzelteile umfassen jeweils ein Mantelteil und zwei Deckelteile, die aus Blech (z.B. Aluminium, Stahl, Nichteisenmetalle) oder Kunststoff vorgefertigt sind und eine einfache Anpassung an die Montagebedingungen (Platz, Baulängen und dgl.) durch Einstellung der Länge des Mantelteils und gegebenenfalls Nacharbeitung der Durchtrittsöffnungen von Rohr- und/oder Armatureneilen erlauben.

Gemäß einer bevorzugten Ausführungsform der Erfindung (insbesondere bei Flansch- und Viereckkappen) bilden die Kappenschalen zwei gleiche Hälften der Isolierkappe. Ferner sind die Mantel- und Deckelteile vorgefertigte, jeweils identische Bauteile. Gegenstand der Erfindung ist somit auch ein Baukastensystem zur Herstellung einer Isolierkappe bestehend aus den Mantelteilen und den Deckelteilen.

Die erfindungsgemäße Isolierkappe besitzt die folgenden Vorteile. Die Baulänge der Isolierkappe kann platzbedarfabhängig vor Ort millimetergenau eingestellt oder nachgearbeitet werden. Es sind alle gängigen Isoliermaterialien, insbesondere flexibles Isoliermaterial (z.B. Materialfasern, Zellkautschuk etc.), verwendbar, die sich problemlos dem Armaturenkörper genau und ohne Hohlräume anpassen und sicher von der Isolierkappe aufgenommen werden. Das äußere Erscheingungsbild der erfindungsgemäßen Isolierkappe ist an die Gestalt der herkömmlichen Blechkappen angepaßt, so daß beide Formen leicht kombinierbar sind.

Wichtige Vorteile ergeben sich aus der Bereitstellung eines Baukastensystems. Obwohl die gesamte Isolierkappe aus sechs Einzelteilen besteht, müssen zur Bereitstellung der zwei Mantelhälften und vier Deckelhälften nur zwei oder maximal drei Grundformen vom Verarbeiter oder Händler gelagert werden, wodurch die Materialplanung erheblich vereinfacht wird. Außerdem sind die Teile gut stapelbar, woraus sich Vorteile für den Transport ergeben.

Mit der erfindungsgemäßen Isolierkappe können bestehende Systeme einfach nachgerüstet werden. Die Kappengestaltung erlaubt eine eng benachbarte Kappenmontage für nebeneinander angeordnete Armaturen. Die Isolierkappe ist für die verschiedensten Anforderungen anpaßbar. Die Isolierkappe ist sowohl für einzelne Armaturen als auch für kompliziertere Aufbauten, z.B. Verteiler, geeignet.

Weitere Einzelheiten und Vorteile der Erfindung werden im folgenden unter Bezug auf die beigefügten Zeichnungen beschrieben. Es zeigen:
- Fign. 1A, 1B: eine Ausführungsform der erfindungsgemäßen Isolierkappe zusammengebaut (A) bzw. geöffnet (B) im Betriebszustand;
- Fig. 2: eine Perspektivdarstellung einer vorgefertigen zusammengebauten Isolierkappe,
- Fign. 3A, 3B: Querschnitts- und Perspektivdarstellungen eines Mantelteils einer erfindungsgemäßen Isolierkappe,
- Fign. 4A, 4B: Querschnitts- und Perspektivdarstellungen eines Deckelteils einer erfindungsgemäßen Isolierkappe,
- Fig. 5A-5D: Grundformen herkömmlicher Isolierkappen (Stand der Technik),
- Fig. 6: eine Perspektivdarstellung einer herkömmlichen Blech-Kofferkappe (Stand der Technik), und
- Fig. 7: eine Perspektivdarstellung einer herkömmlichen Kunststoff-Flanschkappe (Stand der Technik).

Die Erfindung wird im folgenden unter Bezug auf Koffer- und Viereckkappen für Rohrleitungsarmaturen beschrieben, die beispielsweise Ventile, Schieber oder Klappen umfassen. Die Erfindung ist jedoch auch mit allen anderen herkömmlichen Kappenformen, insbesondere gemäß Fig. 5, und bei anderen Anwendungen, z.B. für Rohrverbindungen oder Rohrverteiler, implementierbar.

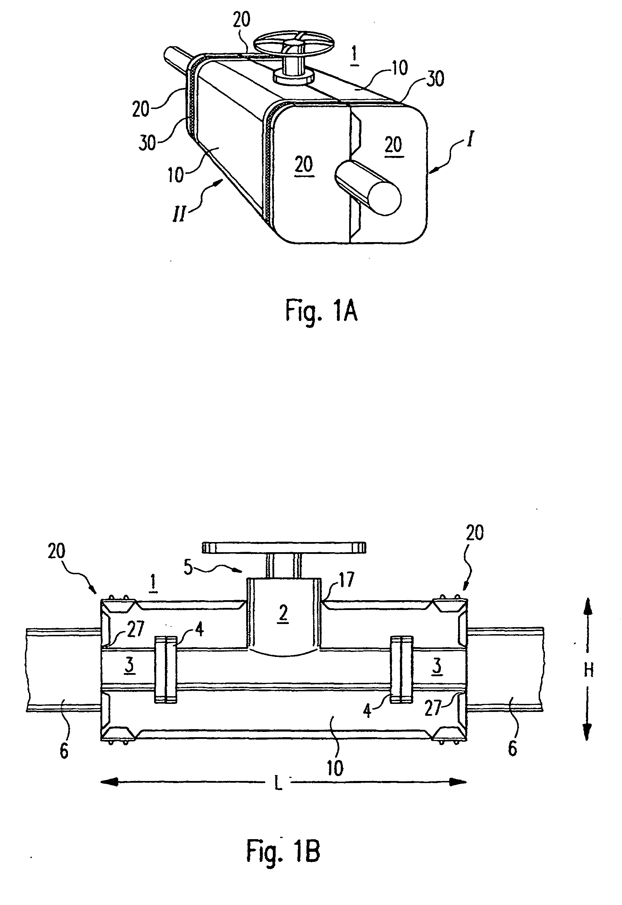

Die Fign. 1A und 1B illustrieren die Anbringung einer erfindungsgemäßen Isolierkappe 1 an einer Rohrarmatur in Form eines Absperrventils. Das Absperrventil 2 ist in einer Rohrleitung 3 mit Flanschverbindungen 4 angebracht. Die Rohrleitung führt ein Medium mit einer Temperatur, die von der Umgebungstemperatur unterschiedlich ist und soll zur Wärmedämmung mit einer Rohrisolierung 6 (in Fig. 1A aus Übersichtlichkeitsgründen nicht dargestellt) und der Isolierkappe 1 isoliert werden. Die Isolierkappe 1 bildet ein stabiles, demontierbares Gehäuse für die Rohrarmatur, aus dem an den Stirn- oder Deckelseiten die Rohrleitung 3 und aus der Mantelseite die Spindel 5 des Absperrventils 2 herausragen. Die Ausrichtung der Rohrleitung 3 bildet eine Bezugsrichtung, die hier auch als Rohrrichtung bezeichnet wird. Zu der Rohrrichtung im wesentlichen senkrecht verläuft eine weitere Bezugsrichtung, die hier auch als Axialrichtung bezeichnet wird. Das Betätigungselement der Armatur oder eine abgehende Leitung im Rahmen einer Verteileranordnung erstreckt sich in der Axialrichtung. Die Baulänge L der erfindungsgemäßen Isolierkappe 1 in Bezug auf die Rohrrichtung ist größer als die Ausdehnung der Armatur (Absperrventil mit Flanschen) gewählt, um auch die Verbindungsflansche der Rohrleitung 3 unter Bereitstellung eines genügenden Montageraumes zu überdecken. Die Bauhöhe H der Isolierkappe in Axialrichtung wird anwendungsabhängig gewählt, ist jedoch mindestens größer als die Verbindungsflansche 4 und kann bis nahe zum Handrad oder Hebel der Armatur reichen, um genügenden Platz für das Isoliermaterial zu bieten.

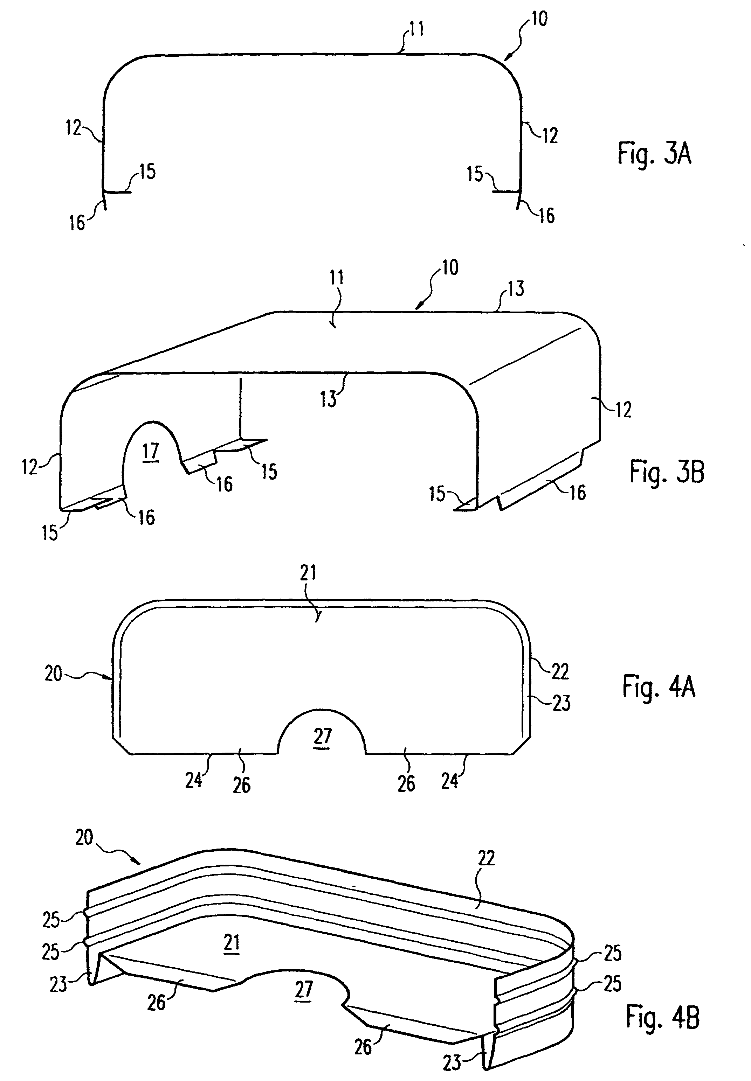

Gemäß Fig. 1A besteht die erfindungsgemäße Isolierkappe 1 aus zwei Kappenhälften oder Kappenschalen I, II, die jeweils aus drei Einzelteilen zusammengesetzt sind. Diese umfassen für jede der Kappenschalen I oder II ein Mantelteil 10 und zwei Deckelteile 20. Im Betriebszustand sind die Kappenschalen I, II so zusammengebaut, daß sie sich an ihren Rändern gegenseitig überlappend berühren und die Deckelteile 20 die Mantelteile 10 in Rohrrichtung abdecken. Beide Kappenschalen werden durch Verbindungselemente 30 miteinander verbunden, die beispielsweise Drahtelemente, Reifenelemente, Bandelemente, Klebebänder oder Spannbänder umfassen können. Zur Bereitstellung der überlappenden Berührung sind die Mantel- und Deckelteile 10, 20 mit Überlappungslaschen 16, 26 versehen, deren Einzelheiten in den Fign. 3A-3B und 4A-4B erkennbar sind und unten beschrieben werden.

Die Kappenschalen I, II bilden ein geschlossenes Gehäuse, das mit einem geeigneten, vorzugsweise flexiblen Isoliermaterial, wie z.B. Mineralwolle, gefüllt ist. Es kann, insbesondere bei Kälteisolierungen, eine Einlage aus Zellkautschuk oder eine Ausschäumung mit einem Isoliermaterial, z.B. PU- oder PIR-Schaum, vorgesehen sein.

Fig. 1B zeigt die Isolierkappe im geöffneten Zustand (ohne Isoliermaterial). Die Kappenschale I, bestehend aus dem Mantelteil 10 und den an dieses in Rohrrichtung angesteckten Dekkelteilen 20, umschließt die Rohrarmatur mit Abstand von den Verbindungsflanschen. Die Durchtrittsöffnungen für die Rohrleitungen 3 und die Spindel 5 werden gerade durch die Öffnungen 17, 27 der Mantel- und Deckelteile 10, 20 jeweils zur Hälfte gebildet, wie dies unten erläutert wird. Die Einzelteile der erfindungsgemäßen Isolierkappe werden vorzugsweise mit vorgefertigten Öffnungen 27 für die Rohrdurchdringungen hergestellt, deren Maße an die Maße der standardmäßig eingesetzten Rohrleitungen und/oder Armaturdimensionen angepaßt sind. Die Öffnung 17 wird vorzugsweise vor Ort eingebracht, um die Kappe nach Bedarf in Rohrrichtung aus der Armaturmitte versetzen zu können.

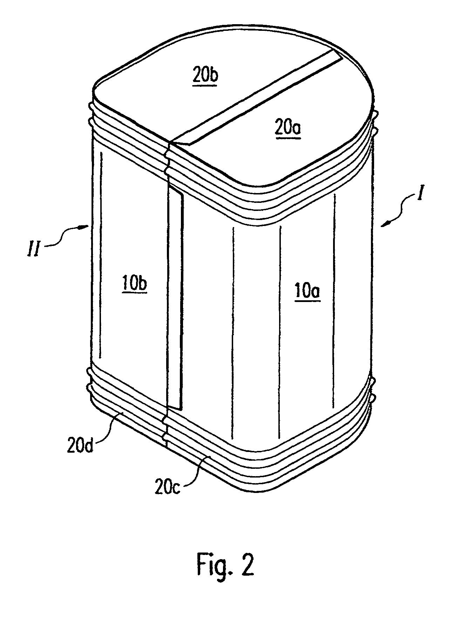

Fig. 2 zeigt in schematischer Perspektivansicht eine Isolierkappe in Form einer Kofferkappe, die wiederum aus zwei Kappenschalen I, II jeweils mit Mantelteilen 10a, 10b und Deckelteilen 20a, 20c, 20b, 20d besteht. Die seitlichen Öffnungen zur Rohrdurchführung sind nicht dargestellt. Die Kofferkappe besitzt eine asymmetrische Bauform, bei der die zu einer Kappenschale gehörenden Deckelteile nicht identisch, sondern in Bezug auf die Deckelteilebene spiegelsymmetrisch sind. Bei dieser Gestaltung besteht das Baukastensystem aus drei Grundformen, nämlich der Mantelhälfte und zwei Deckelhälften.

Die Einzelteile der Isolierkappe werden im folgenden unter Bezug auf die Fign. 3A, 3B und 4A, 4B beschrieben. Das Mantelteil 10 ist ein in einer ersten Bezugsrichtung sich gerade erstreckendes Bauteil, das quer zu dieser Bezugsrichtung kappenformabhängig gewölbt ist. In Montageposition entspricht die erste Bezugsrichtung der obengenannten Rohrrichtung. Die Wölbung des Mantelteils 10 zeigt in Fig. 3A ein bestimmtes Profil für den Fall einer Viereckkappe gemäß Fig. 1A. Die Seitenflächen 11, 12, die jeweils mit einem gekrümmten Übergang im wesentlichen senkrecht aufeinanderstehen, bilden ein flaches, abgeplattetes U-Profil. Die Seitenflächen 11, 12 sind im wesentlichen eben und in der obengenannten ersten Bezugsrichtung durch gerade Querränder 13 begrenzt. Die Querränder 13 sind dazu vorgesehen, von Randaufnahmen der Deckelteile aufgenommen zu werden, wie dies unten beschrieben wird.

Die übrigen Ränder (Längsränder 15, 16) sind zur überlappenden und verspannten Berührung der gegenüberliegenden Kappenschalen im zusammengebauten Zustand eingerichtet und erstrecken sich in der ersten Bezugsrichtung (entsprechend der Rohrrichtung). Die Längsränder 15, 16 weisen an den Enden Winkelelemente 15 auf. Die Winkelelemente 15 sind gegenüber den Seitenflächen 12 um rd. 90° zum Kappeninneren abgewinkelt und erstrecken sich über eine Randlänge von rd. 5 cm. Dies erlaubt eine erleichterte Fixierung des flexiblen Isoliermaterials bzw. ein Zurückhalten des Isoliermaterials in der Kappe bei Demontage. Die Überlappungslaschen 16 besitzen eine Breite senkrecht zum Rand von rd. 1,5 cm. Sie dienen der Stabilisierung im Bereich der Überlappung der aneinandergrenzenden Kappenschalen und sind zur Ausbildung einer bestimmten Spannung bei der Überlappung leicht abgekantet (rd. 10 bis 20° bezüglich der Seitenflächen 12).

Fig. 3B zeigt das Mantelteil 10 in Perspektivdarstellung. Neben den erläuterten Seitenflächen 11, 12, deren geraden Querrändern 13 und strukturierten Längsrändern 15, 16 ist ferner die Öffnung 17 zur Aufnahme einer senkrecht von der Rohrrichtung sich erstreckenden Spindel einer Armatur oder einer weiteren Rohrverbindung gezeigt. Bei einer Isolierkappe für Rohrverteiler sind mehrere, voneinander entsprechend dem Abstand der abzweigenden Rohre getrennte Öffnungen vorgesehen.

Das Mantelteil 10 und das unten beschriebene Deckelteil 20 werden jeweils durch Thermoverformung einstückig hergestellt. Sie bestehen aus Kunststoff mit einer Dicke im Bereich von 0,5 bis 3 mm, vorzugsweise 1 bis 1,5 mm. Sie können aber auch aus anderem Material, wie Eisenblech oder Aluminium durch Pressen oder Tiefziehen geformt werden, wobei die Materialdicke dünner gewählt werden kann.

Die in den Fign. 4A und 4B illustrierten Deckelteile 20 einer erfindungsgemäßen Isolierkappe besitzen jeweils eine im wesentlichen ebene Stirnfläche 21, die entsprechend dem Profil des Mantelteils 11 (s. Fig. 3A) geformt ist. Dies ist in der Draufsicht auf ein Deckelteil 20 gemäß Fig. 4A illustriert. Die Stirnfläche 21 besitzt an einem Innenrand 24, der dazu eingerichtet ist, im zusammengebauten Zustand der Kappenschalen den Innenrand des angrenzenden Deckelteils überlappend, unter Ausbildung einer Spannung zu berühren, mittig eine halbkreisförmige Öffnung 27 zur Bildung der Durchführung für die Rohrleitung 3 (s. Fig. 1B) und Überlappungslaschen 26, die aus der Stirnfläche 21, gegebenenfalls zur Ausbildung der mechanischen Spannung gegenüber dieser leicht geneigt, herausragen. Die Überlappungslaschen 26 besitzen eine Breite von rd. 1,5 cm.

Am Außenrand der Stirnfläche 21 ist eine zu dieser senkrecht stehende Randkrempe 22 vorgesehen, die mit weiteren Einzelheiten in der Perspektivdarstellung gemäß Fig. 4B gezeigt ist. Die Randkrempe 22 besitzt mehrere Funktionen. Erstens bildet sie im zusammengesetzten Zustand eine Überlappung mit dem angrenzenden Mantelteil 10 an dessen Querrand 13. Ferner ist die Randkrempe 22 Teil einer Randaufnahme für den Querrand 13 des Mantelteils 10. Schließlich ist die Randkrempe 22 mit zwei umlaufenden Sicken 25 versehen, die einerseits die Stabilität der Randkrempe 22 und damit der erfindungsgemäßen Isolierkappe erhöhen und andererseits eine Führung für die Verbindungselemente 30 (s. Fig. 1A) bilden. Die Randkrempe 22 kann vorteilhafterweise als Maß für den Zuschnitt von Isoliermaterial für die Deckel verwendet werden.

Beim Übergang von der Stirnfläche 21 zur Randkrempe 22 ist eine umlaufende Nut 23 gebildet, die die Randaufnahme für den Querrand 13 des Mantelteils 10 bildet. Die Nut besitzt eine Tiefe von rd. 3 bis 10 mm, vorzugsweise 5 bis 7 mm, und eine Breite, die mit der Dicke des Materials des Mantelteils 10 identisch oder geringfügig geringer als diese ist, wodurch die Deckelteile 20 fest auf die Mantelteile 10 aufgesteckt werden können.

Zum Zusammenbau einer erfindungsgemäßen Isolierkappe werden zwei Mantelteile 10, vier Deckelteile 20 und Verbindungselemente 30 verwendet. Zunächst werden jeweils ein Mantelteil und zwei Deckelteile zu einer Kappenschale zusammengesetzt. Anwendungsabhängig wird dabei zuerst das Mantelteil mit einem einfachen Schneidwerkzeug (z.B. Blechschere) auf die erforderliche Baulänge L zugeschnitten. Dann werden die Deckelteile an das Mantelteil angesteckt. Ein wichtiges Merkmal der Erfindung besteht darin, daß das Mantelteil vom Deckelteil aufgenommen wird bzw. das Deckelteil das Mantelteil außen überlappt. Dadurch ist es möglich, den Querrand 13 des Mantelteils 10 als geraden, der Mantelfläche folgenden Rand ohne eine besondere Bauform auszubilden. Dies ermöglicht den einfachen Zuschnitt der Mantelteile auf die erforderliche Baulänge L. Die Verbindung zwischen den Mantel- und Deckelteilen kann lösbar als Steckverbindung oder unlösbar als Klebe- oder Kaltschweißverbindung vorgesehen sein. Anschließend werden gegebenenfalls die Öffnungen 17, 27 zum Durchtritt der Rohrleitungen und der Armaturenteile nachgearbeitet. Dann wird die Isolierkappe aus zwei identischen Kappenschalen zusammengebaut. Es folgt ein Einlegen des Isoliermaterials und ein Zusammenfügen der Kappenschalen, so daß sie sich überlappend berühren. Schließlich werden die Verbindungselemente 30 entlang der Deckelteile angebracht.

Eine erfindungsgemäße Isolierkappe kann gegenüber der beschriebenen Ausführungsform in Bezug auf die Kappenform, die Art der Überlappungslaschen, die Geometrie der Überlappungslaschen, die Form der Sicken, die beispielsweise durch Ausbuchtungen ersetzt werden können, den Ort der Anbringung der Verbindungselemente und dergl. modifiziert werden.

## Patentansprüche

1. Isolierkappe (1) zur thermischen Isolierung einer Armatur oder Rohrverbindung, bestehend aus zwei Kappenschalen (I, II), die im zusammengebauten Zustand ein die Armatur oder Rohrverbindung umschließendes, Isolationsmaterial aufnehmendes Gehäuse bilden, und jede Kappenschale (I, II) aus einem Mantelteil (10) und zwei Deckelteilen (20) besteht, die zusammensetzbar sind, wobei die Fläche jedes Mantelteils (10) mit einem vorbestimmten Profil gewölbt ist, **dadurch gekennzeichnet, dass** die Deckelteile (20) jeweils eine Randaufnahme (23) für einen dem Profil folgenden Querrand (13) des Mantelteils (10) aufweisen.

2. Isolierkappe gemäß Anspruch 1, bei dem jedes Deckelteil (20) eine ebene Stirnfläche (21) aufweist, deren äußerer Rand durch die Randaufnahme (23) gebildet wird.

3. Isolierkappe gemäß Anspruch 1 oder 2, bei dem jedes Deckelteil (20) am äußeren Rand eine Randkrempe (22) aufweist, die im zusammengesetzten Zustand eine Überlappung mit dem angrenzenden Mantelteil (10) bildet.

4. Isolierkappe gemäß einem der Ansprüche 1 bis 2, bei dem die Randaufnahme durch eine am äußeren Rand jedes Deckelteils (20) umlaufende Nut (23) gebildet wird.

5. Isolierkappe gemäß Anspruch 3 oder 4, bei dem die Randkrempe (22) mindestens zwei umlaufende Sicken (25) aufweist.

6. Isolierkappe gemäß einem der vorhergehenden Ansprüche, bei der die Mantel- und Deckelteile (10, 20) an ihren, im zusammengesetzten Zustand zueinanderweisenden Rändern Überlappungslaschen (16, 26) aufweisen.

7. Isolierkappe gemäß Anspruch 6, bei der die Überlappungslaschen (16, 26) gegenüber dem übrigen Mantel- bzw. Deckelteil (10, 20) geneigt sind, so daß sich im zusammengesetzten Zustand eine Überlappung mit einer mechanischen Spannung ausbildet.

8. Isolierkappe gemäß einem der vorhergehenden Ansprüche, bei der beide Kappenschalen (I, II) identisch oder spiegelsymmetrisch aufgebaut sind, so daß die gesamte Isolierkappe zwei identische Mantelteile (10) und mindestens zwei identische Deckelteile (20) aufweist.

9. Isolierkappe gemäß einem der vorhergehenden Ansprüche, bei der die Mantel- bzw. Deckelteile (10, 20) jeweils einstückig durch Thermoverformung aus Kunststoff hergestellt sind oder aus Blech bestehen.

10. Verwendung einer Isolierkappe gemäß einem der Ansprüche 1 bis 9 zur thermischen Isolierung von Rohrarmaturen, Flanschverbindungen oder Rohrverteilern.

## Claims

1. Insulation cover (1) for thermally insulating a fitting or pipe connection, said cover comprising two cover shells (I, II), which in the assembled state form a housing which encloses the fitting or pipe connection and accommodates insulating material, and each cover shell (I, II) comprises a casing part (10) and two lid parts (20) which are dismountable, the face of each casing part (10) being curved with a predetermined profile, **characterised in that** the lid parts (20) each have an edge receiver (23) for a transverse edge (13), following the profile, of the casing part (10).

2. Insulation cover according to claim 1, in which each lid part (20) has a flat end face (21), the outer edge of which is formed by the edge receiver (23).

3. Insulation cover according to claim 1 or 2, in which each lid part (20) has at the outer edge an edge rim (22) which, in the assembled state, forms an overlap with the adjoining casing part (10).

4. Insulation cover according to one of claims 1 to 2, in which the edge receiver is formed by a circumferential groove (23) on the outer edge of each lid part (20).

5. Insulation cover according to claim 3 or 4, in which the edge rim (22) has at least two circumferential beads (25).

6. Insulation cover according to one of the preceding claims, in which the casing and lid parts (10, 20) have overlap lugs (16, 26) at their edges which face one another in the assembled state.

7. Insulation cover according to claim 6, in which the overlap lugs (16, 26) are inclined relative to the rest of the respective casing or lid part (10, 20), such that in the assembled state an overlap with a mechanical tension is formed.

8. Insulation cover according to one of the preceding claims, in which the two cover shells (I, II) are constructed identical or with mirror symmetry, such that the overall insulation cover has two identical casing parts (10) and at least two identical lid parts (20).

9. Insulation cover according to one of the preceding claims, in which the respective casing or lid parts (10, 20) are each produced as one piece by thermoforming from plastics material, or consist of sheet metal.

10. Use of an insulation cover according to one of claims 1 to 9 for thermally insulating pipe fittings, flanged joints or pipe manifolds.

## Revendications

1. Coiffe isolante (1) pour l'isolation thermique d'une armature ou d'une jonction de tuyaux, composée de deux coquilles de coiffe (I, II), formant dans un état assemblé un boîtier accueillant le matériau isolant, entourant l'armature ou la jonction de tuyaux, et chaque coquille de coiffe (I, II) est composée d'une pièce d'enveloppe (10) et de deux pièces de couvercle (20), pouvant être rassemblées, la surface de chaque pièce d'enveloppe (10) étant courbée avec un profil prédéfini, **caractérisée en ce que** les pièces de couvercle (20) comportent respectivement une prise de bordure (23) pour une bordure transversale (13) suivant le profil de la pièce d'enveloppe (10).

2. Coiffe isolante selon la revendication 1, dans laquelle chaque pièce de couvercle (20) comporte une surface frontale lisse (21), dont la bordure externe est formée par la prise de bordure (23).

3. Coiffe isolante selon la revendication 1 ou 2, dans laquelle chaque pièce de couvercle (20) comporte un rebord de bordure (22) sur la bordure externe, formant un chevauchement avec la pièce d'enveloppe (10) adjacente à l'état assemblé.

4. Coiffe isolante selon l'une quelconque des revendications 1 à 2, dans laquelle la prise de bordure est formée par une rainure (23) s'étendant sur la bordure externe de chaque pièce de couvercle (20).

5. Coiffe isolante selon la revendication 3 ou 4, dans laquelle le rebord de bordure (22) comporte au moins deux nervures (25) périphériques.

6. Coiffe isolante selon l'une quelconque des revendications précédentes, dans laquelle les pièces d'enveloppe et de couvercle (10, 20) comportent sur leurs bordures opposées à l'état assemblé des pattes de chevauchement (16, 26).

7. Coiffe isolante selon la revendication 6, dans laquelle les pattes de chevauchement (16, 26) sont inclinées par rapport à la pièce d'enveloppe ou de couvercle (10, 20) restante, de manière à former un chevauchement en état assemblé à l'aide d'une tension mécanique.

8. Coiffe isolante selon l'une quelconque des revendications précédentes, dans laquelle les deux coquilles de coiffe (I, II) sont conçues de manière identique ou symétrique, de manière à ce que toute la coiffe isolante comporte deux pièces d'enveloppe identiques (10) et au moins deux pièces de couvercles identiques (20).

9. Coiffe isolante selon l'une quelconque des revendications précédentes, dans laquelle les pièces d'enveloppe et de couvercle (10, 20) sont chacune fabriquées en une seule pièce par formage thermique de matière plastique ou sont composées de tôle.

10. Utilisation d'une coiffe isolante selon l'une quelconque des revendications 1 à 9 pour l'isolation thermique d'armatures de conduits, de liaisons à brides ou de jonctions de tuyaux.
